Europäisches Patentamt

European Patent Office

Office européen des brevets

(11) Veröffentlichungsnummer: **0 271 676**
**A1**

## (12) EUROPÄISCHE PATENTANMELDUNG

(21) Anmeldenummer: 87115644.4

(22) Anmeldetag: 24.10.87

(51) Int. Cl.⁴: **F16C 11/06**

(30) Priorität: 22.11.86 DE 3639963

(43) Veröffentlichungstag der Anmeldung:
22.06.88 Patentblatt 88/25

(84) Benannte Vertragsstaaten:
DE FR GB IT

(71) Anmelder: **TRW Ehrenreich GmbH & Co. KG**
**Hansa-Allee 190**
**D-4000 Düsseldorf 11(DE)**

(72) Erfinder: **Eiichi, Ito**
**Feldstrasse 22**
**D-4005 Meerbusch 1(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**D-4000 Düsseldorf 11(DE)**

(54) **Kugelgelenk.**

(57) Ein Kugelgelenk für Übertragungsgestänge in Kraftfahrzeugen mit einer zwischen einem Gelenkgehäuse (1) aus Kunststoff und einem Kugelkopf (3) eingesetzten Lagerschale (2) aus Kunststoff, wobei die Lagerschale (2) mit Vorsprüngen (7) an ihrem Mantel Hinterschnitte (8) an der Innenwand des Gelenkgehäuses (1) hintergreift soll einfacher montierbar sein und große Kräfte übertragen können. Hierzu sind die Vorsprünge (7) der Lagerschale (2) in Nuten (15) der Innenwand des Gelenkgehäuses (1) einschiebbar, die sich von einer Stirnseite (10) des Gelenkgehäuses aus in Zapfenachsrichtung erstrecken und sind die Vorsprünge durch Öffnungen der Nutflanken (16) in Vertiefungen (17) der Innenwand des Gelenkgehäuses (1) eindrehbar, deren im wesentlichen in Umfangsrichtung sich erstreckende Begrenzungswände Hinterschnitte (8) zum Abstützen der Vorsprünge (7) bilden.

Fig.1

Fig.2

## Kugelgelenk

Gegenstand der Erfindung ist ein Kugelgelenk für Übertragungsgestänge in Kraftfahrzeugen, mit einer zwischen einem Gelenkgehäuse aus Kunststoff und einem Kugelkopf eingesetzten Lagerschale aus Kunststoff, wobei die Lagerschale mit Vorsprüngen an ihrem Mantel Hinterschnitte an der Innenwand des Gelenkgehäuses hintergreift.

Derzeit gibt es Bestrebungen, das Gelenkgehäuse von Kugelgelenken aus Kunststoff herzustellen. Dadurch sollen die Herstellkosten und das Bauteilgewicht reduziert werden. Außerdem können Gelenkgehäuse aus Kunststoff einteilig an Übertragungsgestänge von Kraftfahrzeugen angeformt werden. Beispielsweise erscheint es möglich, eine Verbindungsstrebe für einen Stabilisator einteilig mit einem Gelenkgehäuse aus GFK herzustellen. Da jedoch die Übertragungsgestänge in Kraftfahrzeugen erheblichen Beanspruchungen unterliegen, muß die Lagerschale im Gelenkgehäuse gegen Ausziehen und Ausdrücken gesichert sein. Darüber hinaus müssen Kugelgelenke in diesem Einsatzbereich hermetisch abgedichtet sein, da sie harten Umgebungseinflüssen ausgesetzt sind.

Aus der DE-OS 32 39 208 ist ein Kugelgelenk mit einem Gelenkgehäuse aus Kunststoff bekannt, in das eine zweiteilige Lagerschale eingesetzt ist, dessen eine Lagerschalenhälfte ebenfalls aus Kunststoff hergestellt ist. Diese Lagerschalenhälfte weist an ihrem Mantel eine Ringnut auf, mit der sie an einem umlaufenden Vorsprung des Gelenkgehäuses verrastet ist. Darüber hinaus ist diese Lagerschalenhälfte mittels eines stirnseitigen Flansches gesichert, der an der Außenseite des Gelenkgehäuses anliegt.

Dieses vorbekannte Kugelgelenk ist zum Übertragen hoher Kräfte ungeeignet. Zum einen nämlich kann der Kugelkopf aus dem, die andere Lagerschalenhälfte bildenden metallischen Ring ohne weiteres ausgezogen werden. Zum anderen ist die Verrastung der Lagerschalenhälfte aus Kunststoff nicht geeignet, hohe Ausdrückkräfte aufzufangen: Um allzu hohe Einpreßkräfte bei der Montage dieser Largerschalenhälfte zu vermeiden, kann der im Gelenkgehäuse umlaufende Vorsprung nicht allzu groß bemessen werden. Große Einpreßkräfte würden nämlich zu einer Beschädigung der Kunststoffteile insbesondere an den Seitenwänden des Vorsprunges und den Flanken der Nut hervorrufen. Deshalb kann bei der vorbekannten Konstruktion nur eine relativ kleine Tragfläche verwirklicht werden. Darüber hinaus besteht die Gefahr des Mitdrehens der Lagerschalenhälften mit dem Kugelkopf, was einen Verschleiß auch im Bereich der Schnappverbindung bedingen kann und die Gefahr des Ausdrückens noch steigert.

Schleißlich ist das Gelenkgehäuse des vorbekannten Kugelgelenkes aufwendig in der Herstellung. Es bedarf nämlich eines aufwendigen Kernstempels, um den umlaufenden Vorsprung zu erzeugen und das Gelenkgehäuse nach dem Spritzgießen zu entformen. Alternativ kann der Vorsprung auch nach dem Spritzgießen eingearbeitet werden, was einen aufwendigen Nachbearbeitungsschritt bedeutet.

Davon ausgehend liegt der Erfindung die **Aufgabe** zugrunde, ein verbessertes Kugelgelenk mit Gelenkgehäuse und Lagerschale aus Kunststoff zu schaffen, das insbesondere einfacher montierbar ist, bei der Montage nicht der Gefahr der Beschädigung durch hohe Einpreßkräfte ausgesetzt ist und das hohe Kräfte übertragen kann, ohne die Gefahr des Ausziehens oder Ausdrückens des Kugelzapfens.

Zur technischen **Lösung** dieser Aufgabe wird ein gattungsgemäßes Kugelgelenk vorgeschlagen, bei dem die Vorsprünge der Lagerschale in Nuten der Innenwand des Gelenkgehäuses einschiebbar sind, die sich von einer Stirnseite des Gelenkgehäuses aus in Zapfenachsrichtung erstrecken und bei dem die Vorsprünge durch Öffnungen der Nutflanken in Vertiefungen der Innenwand des Gelenkgehäuses eindrehbar sind, deren im wesentlichen in Umfangsrichtung sich erstreckende Begrenzungswände Hinterschnitte zum Abstützen der Vorsprünge bilden.

Bei einem erfindungsgemäßen Kugelgelenk wird also die Lagerschale wie bei einem Bajonettverschluß zunächst in Zapfenachsrichtung in das Gelenkgehäuse eingeschoben und, wenn die Vorsprünge die Öffnungen der Nutflanken erreichen, verdreht, so daß die Vorsprünge an den Begrenzungswänden der Vertiefungen zur Anlage kommen, an denen sie sich unter axialer Belastung abstützen. Die Montage eines solchen Kugelgelenkes ist äußerst einfach, weil eine formschlüssige Verbindung von Lagerschale und Gelenkgehäuse ohne besondere Einpreßkräfte erzielt wird. Zur Sicherung der Lagerschale im Gelenkgehäuse reicht es in vielen Fällen aus, wenn die Vorsprünge unter einer geringen Vorspannung gegen die Hinterschnitte gedrückt werden. Ein erfindungsgemäßes kugelgelenk kann besonders hohe Kräfte in axialer Richtung übertragen, da die Abmessungen der Vorsprünge relativ groß gewählt werden können, so daß sich große Tragflächen ergeben. Die Gefahr einer Beschädigung der Tragflächen bei der Montage besteht nicht, da diese praktisch nicht verformt werden.

Um die Lagerschale sowohl gegen Ausziehen als auch gegen Ausdrücken zu sichern, kann die Vertiefung als radial umlaufende Nut ausgebildet sein. Es ist aber auch möglich, Vertiefungen in zwei Querschnittsebenen des Gelenkgehäuses anzuordnen, die mit Vorsprüngen in zwei Querschnittsebenen der Lagerschale zusammenarbeiten. Andere Möglichkeiten der Sicherung der Lagerschale gegen Ausziehen oder Ausdrücken werden weiter unten besprochen.

Bei einer Ausgestaltung der Erfindung hat die Lagerschale in einer Querschnittsebene maximal zwei um 180° versetzte Vorsprünge, deren Stützflächen für die Hinterschnitte des Gelenkgehäuses sich jeweils über etwa ein Viertel des Umfanges der Lagerschale erstrecken. Hierdurch wird eine relativ gleichmäßige Krafteinleitung von der Lagerschale in das Gelenkgehäuse erreicht und werden große Tragflächen verwirklicht.

Bei einer weiteren Ausgestaltung sind die Stützflächen der Vorsprünge spitzwinklig zu einer Querschnittsebene der Lagerschale geneigt und die die Hinterschnitte bildenden Begrenzungswände des Gelenkgehäuses entsprechend geneigt. Hierdurch wird die Lagerschale in einer Schraubbewegung mit dem Gelenkgehäuse verspannt. Wenn die Stützflächen der Vorsprünge seitliche Rastnocken aufweisen, die in Ausnehmungen der Lagerschale einrastbar sind, wird die Lagerschale besonders effektiv gegen ein Verdrehen im Gelenkgehäuse gesichert.

Bei einer weiteren Ausgestaltung sind die Vertiefungen des Gelenkgehäuses zum Eindrehen der Vorsprünge der Lagerschale zu einer Stirnseite des Gelenkgehäuses hin offen, wodurch das Gelenkgehäuse besonders einfach aus Kunststoff spritzbar ist. Es ist nämlich möglich, den die Kontur der Vertiefungen bestimmenden Kernstempel oder Kernstempelteil zum Entformen des Gelenkgehäuses aus diesem in Richtung der Stirnseite herauszuziehen, zu der die Vertiefungen hin offen sind. Die Lagerschale ist gegen Ausziehen und Ausdrücken gesichert, wenn beispielsweise in zwei Querschnittsebene Vertiefungen angeordnet werden. Bei einer weiteren Ausgestaltung sind die Vertiefungen zu der Stirnseite des Gelenkgehäuses hin offen, die der Stirnseite mit der Einführöffnung für die Lagerschale entgegengesetzt ist und weist die Lagerschale einen Randflansch zur Abstützung an der Stirnseite mit der Einführöffnung auf. Hierdurch wird die Lagerschale gegen Ausziehen und Ausdrücken gesichert und außerdem durch den umlaufenden Randflansch vor dem Eindringen von Verschmutzung und Feuchtigkeit geschützt.

Bei einer weiteren Ausgestaltung sind die Vorsprünge der Lagerschale sich in Umfangsrichtung der Lagerschale erstreckende Stege, wodurch Vorsprünge in mehreren Querschnittsebenen der Lagerschale angeordnet werden können, wenn extrem große Kräfte übertragen werden sollen.

Bei einer weiteren Ausgestaltung sind die Vertiefungen zu der Stirnseite des Gelenkgehäuses hin offen, die der Stirnseite mit der Einführöffnung für die Lagerschale entgegengesetzt ist, sind die Nuten des Gelenkgehäuses axial durch in Umfangsrichtung verlaufende Endanschläge begrenzt und die die Hinterschnitte hintergreifenden Stege seitlich an den Endanschlägen abgestützt. Hierdurch wird die Lagerschale gegen Ausziehen und Ausdrücken gesichert, ohne daß es eines Randflansches oder weiterer Vorsprünge in einer anderen Querschnittsebene bedarf. Da sich die Nuten zum Einschieben der Vorsprünge und die Vertiefungen zum Eindrehen der Vorsprünge zu entgegengesetzten Stirnseiten des Gelenkgehäuses hin öffnen, ist dieses nach dem Spritzgießen entformbar, indem die beiden Kernstempelteile eines zweigeteilten Kernstempels in entgegengesetzte Richtung aus dem Gelenkgehäuse herausgezogen werden. Der eine Kernstempelteil bestimmt dabei die Kontur der Vertiefungen und der andere Kernstempelteil die der Nuten.

Bei einer weiteren Ausgestaltung hat die Lagerschale an einer Stirnseite einen Ansatz mit Abflachungen zum Ansetzen eines Werkzeuges.

Bei einer weiteren Ausgestaltung ist das Gelenkgehäuse aus GFK hergestellt, wodurch besonders feste und tragfähige Konstruktionen möglich sind. Die Lagerschale wird vorteilhafterweise aus einem hartelastischen Kunststoff, beispielsweise Polyoxymethylen (POM) hergestellt. So kann der Kugelkopf unter einer elastischen Vorspannung und spielfrei gehaltert werden.

Weitere Einzelheiten und Vorteile des Gegenstandes der Erfindung ergeben sich aus der nachfolgenden Beschreibung der zugehörigen Zeichnungen, in denen zwei bevorzugte Ausführungsbeispiele eines erfindungsgemäßen Kugelgelenkes dargestellt worden sind. In den Zeichnungen zeigen:

Fig. 1 ein Kugelgelenk, dessen Lagerschale Stege und einen Randflansch aufweist entlang der Linie I-I der Fig. 2 geschnitten;

Fig. 2 dasselbe Kugelgelenk als perspektivisches Sprengbild;

Fig. 3 ein entlang den Linein III-III der Fig. 2 ausgeschnittener Abschnitt des Gelenkgehäuses;

Fig. 4 Kugelgelenk mit einer Lagerschale mit Stegen, die an Hinterschnitten und Endanschlägen abgestützt sind entlang der Linie IV-IV der Fig. 5 geschnitten;

Fig. 5 dasselbe Kugelgelenk als perspektivisches Sprengbild;

Fig. 6 Teilabschnitt des Gelenkgehäuses desselben Kugelgelenkes entsprechend dem Schnitt VI-VI der Fig. 5.

In der nachfolgenden Beschreibung werden zur Vereinfachung identische bzw. gleichwirkende Bauteile oder Konstruktionselemente mit gleichen Bezugsziffern versehen.

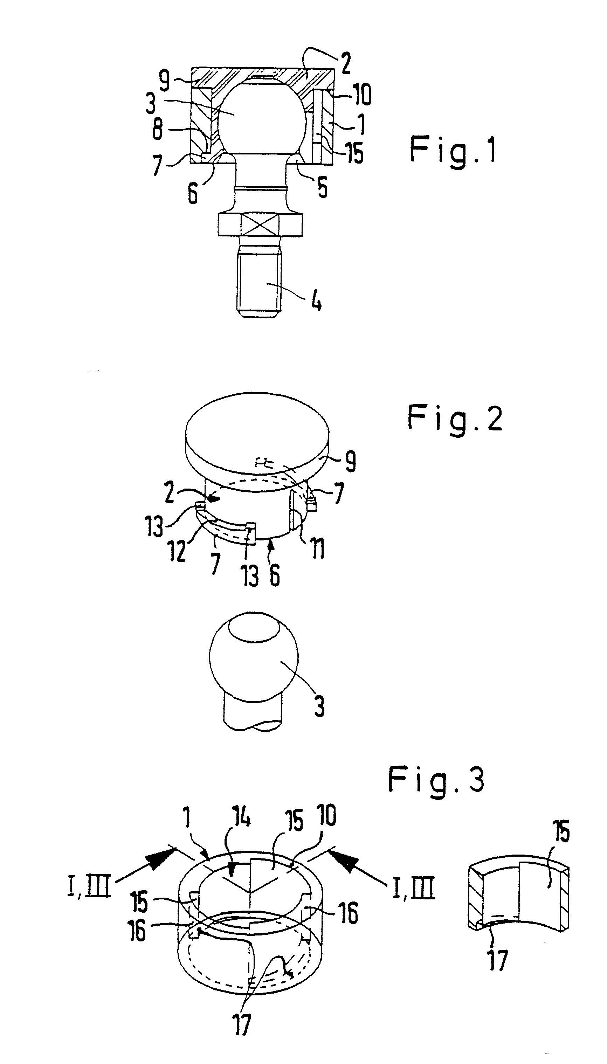

Die Fig. 1 zeigt ein Kugelgelenk aus einem Gelenkgehäuse 1 aus Kunststoff, in das unter Zwischenlage einer elastischen Lagerschale 2 aus Kunststoff ein Kugelkopf 3 eingesetzt ist. Ein einteilig mit dem Kugelkopf 3 verbundener Kugelzapfen 4 ragt aus einer Öffnung 5 der Lagerschale 2 heraus.

Die Lagerschale 2 weist an ihrer zapfenseitigen Stirnseite Vorsprünge 7 auf, die Hinterschnitte 8 des Gelenkgehäuses 1 hintergreifen und ein Ausdrücken der Lagerschale 2 aus dem Gelenkgehäuse 1 verhindern. An der dem Kugelzapfen abgewandten Seite hat die Lagerschale 2 einen Randflansch 9, der auf einer Stirnseite 10 des Gelenkghäuses 1 aufliegt und ein Ausziehen der Lagerschale 2 aus dem Gelenkgehäuse 1 verhindert.

Die Montage des Kugelgelenkes und weitere Einzelheiten seiner Bauteile können besser anhand den Fig. 2 und 3 erläutert werden. Zunächst wird der Kugelkopf 3 in die Lagerschale 2 eingeschoben, wobei axial verlaufende Schlitze 11 ein elastisches Aufbiegen der Lagerschale 2 ermöglichen, wodurch das Einschieben des Kugelkopfes 3 erleichtert und dieser mit einer Vorspannung in der Lagerschale 2 festgehalten wird. Die Vorsprünge 7 sind an der Stirnseite 6 als sich über etwa ein Viertel des Umfanges der Lagerschale 2 erstreckende Stege ausgebildet, deren Stützflächen 12 spitzwinklig zu einer Querschnittsebene der Lagerschale 2 geneigt sind. Die Stützflächen 12 weisen seitliche Rastnocken 13 auf. Die Vorsprünge 7 sind um 180° versetzt auf dem Mantel der Lagerschale 2 angeordnet.

Die vormontierte Einheit aus Kugelkopf 3 und Lagerschale 2 wird in eine Einführöffnung 14 des Gelenkgehäuses 1 eingeschoben, wobei die Vorsprünge 7 in axial verlaufende Nuten 15 eingeschoben werden. Die Nutflanken 16 weisen Öffnungen auf, durch die die Vorsprünge 7 in Vertiefungen 17 des Gelenkgehäuses 1 eindrehbar sind. Der Montagevorgang ist beendet, wenn die Rastnocken 13 beidseitig der Vertiefungen 17 in die Nuten 15 eingreifen und an den Nutflanken 16 zur Anlage kommen. Dann ist die Lagerschale 2 so mit dem Gelenkhäuse 1 verspannt, daß der Randflansch 9 dichtend auf der Stirnseite 10 aufliegt.

Da die Vertiefungen 17 zur unteren Stirnseite des Gelenkgehäuses 1 offen und die Nuten 15 durchgehend ausgebildet sind, kann das Gelenkgehäuse 1 mit einem einteiligen Kernstempel in einer Spritzform hergestellt werden und nach dem Spritzgießen durch Ziehen des Kernstempels nach unten entformt werden.

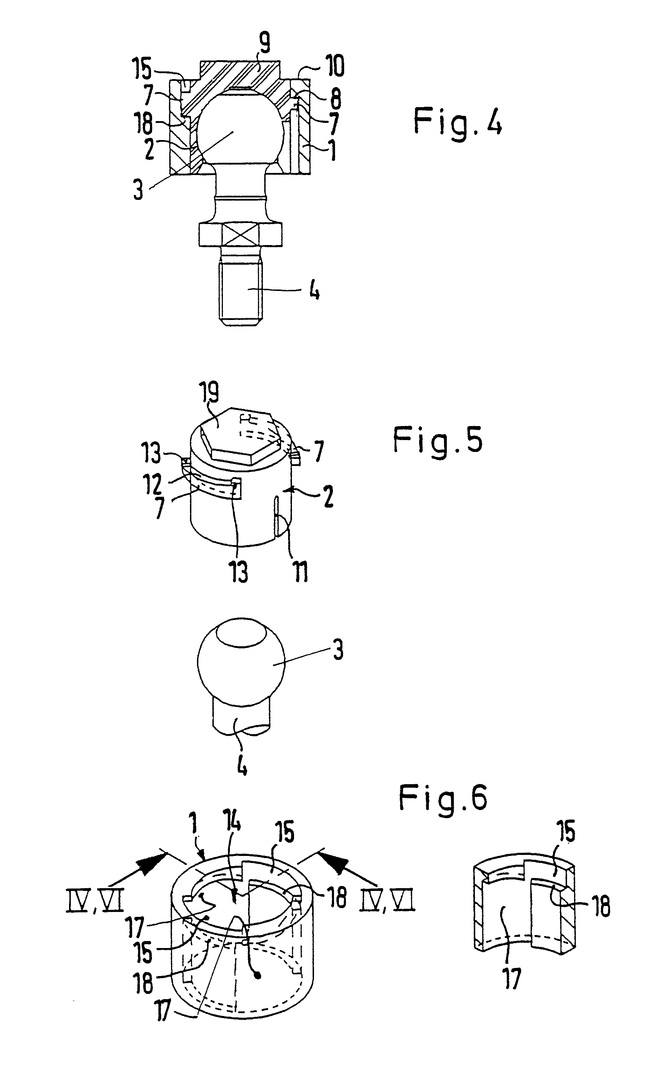

Bei dem in der Fig. 4 dargestellten Ausführungsbeispiel trägt ein Gelenkgehäuse 1 eine Lagerschale 2 mit einem eingesetzten Kugelkopf 3, wobei die Lagerschale 2 nahe der Stirnseite 10 des Gelenkgehäuses 1 mit Vorsprüngen 7 versehen ist. Wie deutlich erkennbar ist, hintergreifen die Erhebungen 7 Hinterschnitte 8 des Gelenkgehäuses 1 und sind diese ferner auf Endanschlägen 18 der Nuten 15 abgestützt. Die Lagerschale 2 ist an der den Kugelzapfen 4 abgewandten Seite mit einem Ansatz 19 versehen der, wie aus der Fig. 5 besser ersichtlich ist, mit seitlichen Abflachungen zum Ansetzen eines Werkzeuges versehen ist. Montage und weitere Einzelheiten lassen sich besser anhand der Fig. 5 erläutern. Der Kugelkopf 3 wird in die Lagerschale 2 eingedrückt, wobei Schlitze 11 ein elastisches Aufbiegen ermöglichen.

Die Vorsprünge 7 sind wiederum mit geneigten Stützflächen 12 versehen und haben die Form sich in Umfangsrichtung der Lagerschale 2 erstreckender Stege. Außerdem sind Rastnocken 13 vorgesehen.

Beim Einsetzen der vormontierten Einheit aus Lagerschale 2 und Kugelzapfen 4 in die Einführöffnung 14 des Gelenkgehäuses 1 gleiten die Vorsprünge 7 in axiale Nuten 15, bis sie auf Endanschlägen 18 aufsitzen. Dann ist die Lagerschale 2 verdrehbar, wobei die Vorsprünge 7 in die Vertiefungen 17 eindringen. Schließlich springen die Rastnocken in die angrenzenden Nuten 15 ein und legen sich an die Nutflanken an, so daß die Lagerschale im Gelenkgehäuse gegen Verdrehen gesichert ist.

Es ist noch zu betonen, daß auch dieses Kugelgelenk oben vollständig abgedichtet ist, weil die Vorsprünge 7 einerseits an den Hinterschnitten 8 dichtend anliegen und andererseits dichtend gegen die Endanschläge 18 drücken, so daß sich ein umlaufende, vollständig geschlossene Dichtfläche ergibt.

Bezugszeichenliste

1 Gelenkgehäuse
2 Lagerschale
3 Kugelkopf
4 Kugelzapfen
5 Öffnung
6 Stirnseite
7 Vorsprung
8 Hinterschnitt
9 Randflansch
10 Stirnseite
11 Schlitz
12 Stützfläche
13 Rastnocken
14 Einführöffnung

15 Nut
16 Nutflanke
17 Vertiefung
18 Endanschlag
19 Ansatz

## Ansprüche

1. Kugelgelenk für Übertragungsgestänge in Kraftfahrzeugen, mit einer zwischen einem Gelenkgehäuse (1) aus Kunststoff und einem Kugelkopf (3) eingesetzten Lagerschale (2) aus Kunststoff, wobei die Lagerschale (2) mit Vorsprüngen (7) an ihrem Mantel Hinterschnitte (8) an der Innenwand des Gelenkgehäuses (1) hintergreift,
**dadurch gekennzeichnet,**
daß die Vorsprünge (7) der Lagerschale (2) in Nuten (15) der Innenwand des Gelenkgehäuses (1) einschiebbar sind, die sich von einer Stirnseite (10) des Gelenkgehäuses (1) aus in Zapfenachsrichtung erstrecken und
daß die Vorsprünge (7) durch Öffnungen der Nutflanken (16) in Vertiefungen (17) der Innenwand des Gelenkgehäuses (1) eindrehbar sind, deren im wesentlichen in Umfangsrichtung sich erstreckende Begrenzungswände Hinterschnitte (8) zum Abstützen der Vorsprünge (7) bilden.

2. Kugelgelenk nach Anspruch 1, dadurch gekennzeichnet, daß die Lagerschale (2) in einer Querschnittsebene maximal zwei um 180° versetzte Vorsprünge (7) hat, deren Stützflächen (12) für die Hinterschnitte (8) des Gelenkgehäuses (1) sich jeweils über etwa ein Viertel des Umfanges der Lagerschale (2) erstrecken.

3. Kugelgelenk nach einem der Ansprüche 1 bis 2, dadurch gekennzeichnet, daß die Stützflächen (12) der Vorsprünge (7) spitzwinklig zu einer Querschnittsebene der Lagerschale (2) geneigt sind und daß die die Hinterschnitte (8) bildenden Begrenzungswände des Gelenkgehäuses (1) entsprechend geneigt sind.

4. Kugelgelenk nach einem der Ansprüche 1 bis 3, dadurch gekennzeichnet, daß die Stützflächen (12) der Vorsprünge (7) seitliche Rastnocken (13) aufweisen, die in Ausnehmungen der Lagerschale (2) einrastbar sind.

5. Kugelgelenk nach einem der Ansprüche 1 bis 4, dadurch gekennzeichnet, daß die Vertiefungen (17) des Gelenkgehäuses (1) zum Eindrehen der Vorsprünge (7) der Lagerschale (2) zu einer Stirnseite des Gelenkgehäuses (1) hin offen sind.

6. Kugelgelenk nach Anspruch 5, dadurch gekennzeichnet, daß die Vertiefungen (17) zu der Stirnseite des Gelenkgehäuses (1) hin offen sind, die der Stirnseite (10) mit der Einführöffnung (14) für die Largerschale (2) entgegengesetzt ist und daß die Lagerschale (2) einen Randflansch (9) zur Abstützung an der Stirnseite (10) mit der Erinführöffnung (14) aufweist.

7. Kugelgelenk nach einem der Ansprüche 1 bis 6, dadurch gekennzeichnet, daß die Vorsprünge (7) der Lagerschale (2) sich in Umfangsrichtung der Lagerschale (2) erstreckende Stege sind.

8. Kugelgelenk nach Anspruch 7 mit dessen Rückbeziehung auf Anspruch 5, dadurch gekennzeichnet, daß die Vertiefungen (17) zu der Stirnseite des Gelenkgehäuses (1) hin offen sind, die der Stirnseite (10) mit der Einführöffnung (14) für die Lagerschale (2) entgegengesetzt ist, daß die Nuten (15) des Gelenkgehäuses (1) axial durch in Umfangsrichtung verlaufende Endan schläge (18) begrenzt sind und daß die die Hinterschnitte (8) hintergreifenden Stege seitlich an den Endanschlägen (18) abgestützt sind.

9. Kugelgelenk nach einem der Ansprüche 1 bis 8, dadurch gekennzeichnet, daß die Lagerschale (2) an einer Stirnseite einen Ansatz (19) mit Abflachungen zum Ansetzen eines Werkzeuges hat.

10. Kugelgelenk nach einem der Ansprüche 1 bis 9, dadurch gekennzeichnet, daß das Gelenkgehäuse (1) aus GFK hergestellt ist.

11. Kugelgelenk nach einem der Ansprüche 1 bis 10, dadurch gekennzeichnet, daß die Lagerschale (2) aus einem hartelastischen Kunststoff, beispielsweise Polyoxymethylen (POM) hergestellt ist.

Fig.1

Fig.2

Fig.3

0 271 676

Fig.4

Fig.5

Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 445 909  (LA DAUPHINOISE SAPPEY) <br> * Insgesamt * | 1 | F 16 C 11/06 |
| A | . | 2,4,5,8 ,9,11 | |
| | --- | | |
| A | FR-A-2 568 958  (NIFCO INC.) <br> ----- | | |

RECHERCHIERTE SACHGEBIETE (Int. Cl.4)

F 16 C

Der vorliegende Recherchenbericht wurde für alle Patentansprüche erstellt

| Recherchenort | Abschlußdatum der Recherche | Prüfer |
|---|---|---|
| DEN HAAG | 29-02-1988 | BEGUIN C.P. |

EPO FORM 1503 03.82 (P0403)